# EUROPEAN PATENT SPECIFICATION

(11) **EP 3 806 392 B1**
(45) Date of publication and mention of the grant of the patent: **18.02.2026**
(21) Application number: 19821914.9
(22) Date of filing: 03.06.2019
(51) Int. Cl.: H04L 41/0677, H04L 41/0631, H04L 41/40, H04L 41/0659

(54) **FAULT MANAGEMENT METHOD AND RELATED DEVICE**
NETZWERKVERWALTUNGSVERFAHREN UND ZUGEHÖRIGE VORRICHTUNG
PROCÉDÉ DE GESTION DE DÉFAUTS ET DISPOSITIF ASSOCIÉ

(30) Priority: 20.06.2018 CN 201810639112
(43) Date of publication of application: 14.04.2021
(73) Proprietor: HUAWEI TECHNOLOGIES CO., LTD., Shenzhen, Guangdong 518129 (CN)
(72) Inventor: JIA, Xiaoqian, Shenzhen, Guangdong 518129 (CN); XU, Ruiyue, Shenzhen, Guangdong 518129 (CN); ZHANG, Kai, Shenzhen, Guangdong 518129 (CN)
(74) Representative: Thun, Clemens
(86) International application number: PCT/CN2019/089774
(87) International publication number: WO 2019/242487

(56) References cited:
- WO-A1-2018/086622
- CN-A- 107 872 339
- ANONYMOUS: "3rd Generation Partnership Project; Technical Specification Group Services and System Aspects; Telecommunication management; Study on management and orchestration of network slicing for next generation network (Release 15)", 3GPP STANDARD; TECHNICAL REPORT; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.1.0, 4 January 2018 (2018-01-04), pages 1 - 75, XP051392292
- HUAWEI: "Add potential solution for NSI supervision", vol. SA WG5, no. West Palm Beach, Florida (US); 20170508 - 20170512, 28 April 2017 (2017-04-28), XP051269869, Retrieved from the Internet <URL:http://www.3gpp.org/ftp/tsg_sa/WG5_TM/TSGS5_113/Docs/> [retrieved on 20170428]
- "3rd Generation Partnership Project; Technical Specification Group Services and System Aspects; Telecommunication management; Management of 5G networks and network slicing; Concepts, use cases and requirements (Release 15)", 10 June 2018 (2018-06-10), XP051458453, Retrieved from the Internet <URL:http://www.3gpp.org/ftp/Meetings%5F3GPP%5FSYNC/SA/Docs> [retrieved on 20180610]
- HUAWEI ET AL.: "Add Network Slicing Related Alarm Data Aggregation Solution", 3GPP TSG SA WG5 (TELECOM MANAGEMENT) MEETING #113 S5-173443, vol. SA WG5, 12 May 2017 (2017-05-12), XP051290002
- HUAWEI: "Add Potential Solution For NSI Supervision", 3GPP TSG SA - 04 - (TELECOM MANAGEMENT) MEETING #113 S5-173155, vol. SA WG5, 28 April 2017 (2017-04-28), XP051269869

## Description

### TECHNICAL FIELD

This application relates to the data processing field, and in particular, to fault management.

### BACKGROUND

With development of network services, a network may provide various service (Service) functions for a tenant (Tenant). The service may be a group of communications services with a specified service level agreement (Service level requirement, SLR) that a user can enjoy, for example, a mobile broadband (mobile broadband, MBB) service, a voice service, an internet of things (Internet of Things, IOT) service, an intelligent parking service, and an intelligent meter reading service.

A network slice (Network Slice, NSL) is an important technical means for a next-generation network to meet special service requirements of different industries and different tenants on a network. The network slice is a type of communication resource that can ensure that a bearer service can meet a service level agreement (Service level requirement, SLR). Hard isolation (physical isolation) or soft isolation (logical isolation) may be performed on such resources based on different requirements. It may be considered that one network slice is a combination of network functions and resources required for completing one or more services, and the network slice is a complete logical network.
Further, prior art document 3GPP standard, technical report, 3GPP TR 28.801, January 4, 2018, refers to a study on management and orchestration of network slicing for a next generation network.
Further, the prior art document, 3GPP draft, S5-173155, April 28, 2017 refers to an addition of potentail solutions for NSI supervision.

### SUMMARY

Embodiments of this application provide a fault management method and a related apparatus. Potential fault information is detected in advance, so that corresponding processing can be performed before an actual fault occurs in a service having a potential fault, to avoid interruption of a group call service caused by the actual fault, thereby improving service continuity provided by a slice network.

The above mentioned problem is solved by the subject matter of the independent claims. Further implementation forms are provided in the dependent claims.
In a first aspect of the invention a fault management method performed by a first management unit being a network slice management function, NSMF, applied to a slice network is provided, wherein the method comprises:
- receiving a first message from a second management unit being a network slice subnet management function, NSSMF, wherein the first message comprises an identifier of a faulty network slice instance, NSI;
   ▪ determining, based on the first message, the faulty NSI;
- determining first potential fault information in the slice network based on the faulty NSI and a first association relationship reflecting a network topology of the slice network,
   ▪ wherein the first association relationship is an association relationship between NSIs and services in the slice network, wherein the faulty NSI is one of the NSIs in the first association relationship,
   ▪ wherein the first potential fault information comprises a service having a potential fault among one or more services that are associated to the faulty NSI in the first association relationship,
   ▪ wherein the potential fault is a possible future fault, which did not yet come into existence as an actual fault;
- performing fault processing based on the first fault potential fault information, the fault processing comprising migrating the service having the potential fault to an NSI without a potential fault.
In a second aspect a network slice management function, NSMF, is provided that is configured to carry out the method according to the first aspect.
In a third aspect a computer program product comprising an instruction is provided, wherein, when the computer program product runs on a computer of a network slice management function, NSMF, the computer is enabled to perform the fault management method according to the first aspect.

It can be learned from the foregoing technical solution that, in the slice network, if the first management unit determines the fault information in the slice network, for example, the faulty slice and/or the faulty service, the first management unit may determine, based on the fault information and an association relationship between slices, the potential fault information that may exist in the slice network, namely the service that may have a potential fault. Because the association relationship between an NSI and a service that are included in the slice network can reflect a network topology relationship between parts in the slice network, the potential fault information determined based on the association relationship can reflect impact of a fault on the slice network by using the network topology relationship. The potential fault information is detected in advance, so that corresponding processing can be performed before an actual fault occurs in the service having a potential fault, to avoid interruption of a group call service caused by the actual fault, thereby improving service continuity provided by the slice network, and improving experience of a tenant in use of the slice network.

### BRIEF DESCRIPTION OF DRAWINGS

FIG. 1 is a schematic diagram of a network topology in a slice network according to an embodiment of this application;
FIG. 2 is a method flowchart of a fault management method according to an embodiment of this application;
FIG. 3 is a method flowchart of a fault management method according to an embodiment of this application;
FIG. 4 is a signaling flowchart of a fault management method according to an embodiment of this application;
FIG. 5 is a signaling flowchart of a fault management method according to an example not forming part of the invention;
FIG. 6 is a signaling flowchart of a fault management method according to an example not forming part of the invention;
FIG. 7 is a signaling flowchart of a fault management method according to an example not forming part of the invention;
FIG. 8 is an apparatus structural diagram of a fault management apparatus according to an embodiment of this application; and
FIG. 9 is an apparatus structural diagram of a fault management apparatus according to an example not forming part of the invention.

### DESCRIPTION OF EMBODIMENTS

The following describes the embodiments of this application with reference to the accompanying drawings.

With development of network services, a network may provide various service functions for a tenant. The tenant in the embodiments of this application may be understood as a renter of an operator network. For example, if an electric power company rents an operator network to deploy an intelligent meter reading service, the electric power company may be a renter of an operator. The tenant generally has a high requirement on a network and often has a personalized customization requirement. Therefore, requirements on various network indicators of the network in which the tenant is located need to be ensured.

During network operation, faults are inevitable. If an alarm process is triggered after a fault is detected in functional modules that provide the personalized customization requirement for the tenant, a tenant service cannot be effectively ensured and a preset indicator requirement cannot be met. Therefore, to ensure continuity of the tenant service, an effective fault detection mechanism needs to be introduced into a slice network, to detect, in advance, a network slice that may fail.

Therefore, an embodiment of this application provides a fault management method, to detect, in advance, a service having a potential fault in a slice network, so that processing can be performed before the service having a potential fault actually fail/fails, to avoid interruption of a tenant service caused by the fault that actually occurs.

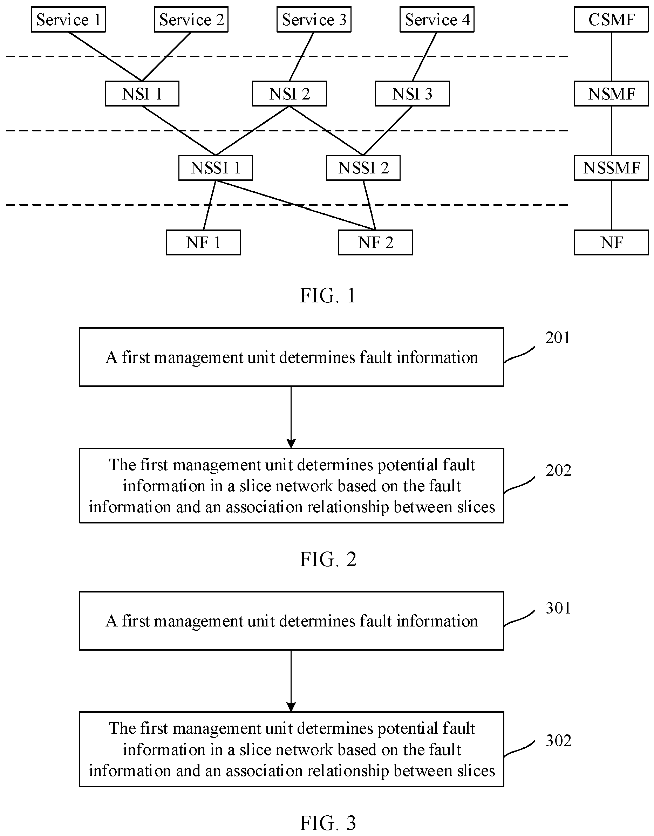

In this embodiment of this application, the fault management method may be applied to a slice network. The slice network may include a plurality of network slice instances (Network Slice Instance, NSI), services carried in the network slices, and network functions (Network Function, NF) implemented by the network slices. The NSI is a component of the slice network, and one NSI may include at least one network slice subnet instance (Network Slice Subnet Instance, NSSI). The NSSI may also be a component of the slice network, one NSI includes at least one NSSI, and one NSSI may include at least one network slice. For example, as shown in FIG. 1, an NSI 2 may include an NSSI 1 and an NSSI 2.

To carry various services and implement various functions, a specific network topology relationship between a service, an NSI, an NSSI, and an NF needs to be set in the slice network. Based on the network topology relationship, a specific NSI that carries a specific service or specific NSIs that carry specific services may be determined, and a specific NSI and/or a specific NSSI that is used for implementing a function or specific NSIs and/or specific NSSIs that are used for implementing functions may be determined. For example, a connection line shown in FIG. 1 may reflect a network topology relationship in a slice network. The network topology relationship may reflect not only a mutual composition relationship between network elements in the slice network, but also a bearer relationship between a service and a network slice in the slice network, an implementation relationship between functions, and the like. For example, a service 1 and a service 2 are carried by an NSI 1 and an NSSI 1, and an NF 1 of the service 1 and an NF 2 of the service 2 may be implemented by using the NSI 1 and the NSSI 1. The network topology relationship of the slice network may be reflected by using an association relationship. For example, there is an association relationship between two connected components shown in FIG. 1. For example, the service 1 and the service 2 are associated with the NSI 1, and the NSI 1 and the NSI 2 are associated with the NSSI 1.

In the slice network, for ease of management, a management architecture of the slice network is a hierarchical management architecture. In other words, the slice network may be divided into a plurality of layers, and each layer has a corresponding management unit for management. For example, the slice network may be divided into a service layer, an NSI layer, and an NF layer. In some slice networks, in addition to the foregoing layers, an NSSI layer may further be obtained through division.

The service that needs to be carried by the slice network is included at the service layer, and the service at the layer may be managed by a communication service management function (Communication Service Management Function, CSMF). The NSI is included at the NSI layer, and the NSSI in the slice network is included at the NSSI layer. The two layers may be respectively managed by different types of slice management units. For example, for the NSI layer, the NSI at the layer may be managed by a network slice management function (Network Slice Management Function, NSMF), and for the NSSI layer, the NSSI at the layer may be managed by a network slice subnet management function (Network Slice Subnet Management Function, NSSMF). The NF that can be implemented in the slice network is included at the NF layer. The hierarchical management architecture of the slice network may be shown in FIG. 1. The CSMF is configured to manage a service 1 to a service 4 at the service layer, the NSMF is configured to manage an NSI 1 to an NSI 3 at the network slice layer, and the NSSMF is configured to manage an NSSI 1 and an NSSI 2 at the subnet slice layer.

After the hierarchical management architecture of the slice network, the association relationship that reflects the network topology relationship, and a function of each layer are clarified, the following describes, with reference to the accompanying drawings, a fault management method provided in an embodiment of this application. FIG. 2 is a method flowchart of a fault management method according to an embodiment of this application.

201: A first management unit determines fault information.

The fault information is a faulty slice in a slice network. There may be one or more faulty slices. The faulty slice is an NSI that has failed, and the faulty slices are some NSIs that have failed. After determining the fault information, the first management unit may find potential fault information corresponding to the fault information based on an association relationship that can be invoked.

The first management unit may determine the fault information based on a message sent by a second management unit. A specific form of the message sent by the second management unit and how the corresponding first management unit determines the fault information are described below in detail.

The first management unit in this application is specifically an NSMF in the slice network, and the second management unit in this application is an NSSMF in the slice network. For ease of description, in the following the NSMF is used as the first management unit and the NSSMF is used as the second management unit.

Therefore, for step 201, the NSMF determines the fault information based on the message reported by the NSSMF. This embodiment of this application provides two optional reporting manners.

In the first reporting manner (being part of the invention), the NSMF obtains a first message from the NSSMF. The first message includes an identifier of a faulty NSI, and furthermore optionally includes an identifier of an NSI having a potential fault, an identifier of a faulty NSSI, an identifier of a faulty NF, or an identifier of a faulty service. In other words, the NSSMF directly reports, to the NSMF, the fault information found by the NSSMF, namely the identifier of the faulty NSI, and optionally the identifiers of the faulty NSSI, and the faulty NF, so that the NSMF can directly determine, based on the identifier carried in the first message, a fault in the slice network, namely an NSI corresponding to the identifier of the faulty NSI, and optionally furthermore an NSSI corresponding to the identifier of the faulty NSSI.

In this manner, because the NSMF has determined the fault in the slice network, system resources of the NSMF can be saved, and efficiency of determining the potential fault information can be improved.

In the second reporting manner (just an example not forming part of the invention), the NSMF may alternatively obtain a second message reported by the NSSMF. The second message may include one or a combination of performance information of the NSSI, an NSSI identifier, an NF identifier, and a service identifier that are managed by the second management unit (for example, the NSSMF). In other words, in this manner, when the NSSMF does not need to determine the fault in the slice network, or when the NSSMF cannot determine the fault in the slice network, the NSMF may determine the fault information.

The NSMF may process the performance information of the NSSI in the second message to identify the faulty NSSI. Alternatively, the NSMF may aggregate a plurality of received second messages, for example, a plurality of second messages obtained in a time period, and then determine the faulty NSI based on a comparison between or a variation trend of related performance information of NSSIs in the second messages. Alternatively, the NSMF may determine the faulty service based on identifiers and the like that are carried in the second message.

In this manner, the NSMF may determine, by aggregating the obtained second messages, the fault information that may not be determined by the NSSMF, thereby improving accuracy of subsequently determining the potential fault information.

The NSMF may alternatively determine the fault information in both the foregoing two manners (just an example not forming part of the invention). In other words, the NSMF may obtain both, the first message and the second message from the NSSMF. When determining the fault information, the NSMF may determine the fault information based on a faulty network element determined by using the second message and with reference to the identifier that is of the fault and that is carried in the first message. In this way, accuracy of determining the fault information is improved.

In the foregoing two manners, the fault information determined by the NSMF includes the faulty NSI. Then, the NSMF may determine the potential fault information based on the fault information and an association relationship that can be invoked by the NSMF.

202: The first management unit determines the potential fault information in the slice network based on the fault information and an association relationship between slices.

The association relationship may be stored in a local storage location of the first management unit, or may be stored in another storage location that can be invoked by the first management unit. The association relationship includes an association relationship between an NSI and a service in the slice network. The association relationship may be used for identifying all or some network topology relationships in the slice network. A specific quantity of network topology relationships included in the slice network may be determined based on a specific application scenario, or may be determined based on layers managed by the first management unit. Specific content of the association relationship is not described in detail herein, and details are described in the following embodiments.

Because the association relationship can reflect a network topology relationship in the slice network, an NSI that has an association relationship with the faulty service is determined based on the identifier of the faulty NSI and the association relationship. Because the determined NSI has an association relationship with the faulty service, the faulty service may directly or indirectly affect normal use of the NSI. For example, the faulty slice may be a component of the determined NSI, or all or some of the determined services may need to be carried by the faulty slice.

Based on this, the first management unit may determine the possible potential fault information in the slice network based on the NSI that is determined based on the fault information and the association relationship. The potential fault information includes a service having a potential fault.

It can be learned that, in the slice network, if the first management unit determines the fault information in the slice network, namely the faulty NSI, the first management unit may determine, based on the faulty NSI and an association relationship between slices, the potential fault information that may exist in the slice network, namely the service that may have a potential fault. Because the association relationship between an NSI and a service that are included in the slice network can reflect the network topology relationship between parts in the slice network, the potential fault information determined based on the association relationship can reflect impact of a fault on the slice network by using the network topology relationship. The potential fault information is detected in advance, so that corresponding processing can be performed before an actual fault occurs in the the service having a potential fault, to avoid interruption of a group call service caused by the actual fault, thereby improving service continuity provided by the slice network, and improving experience of a tenant in use of the slice network.

Then, the fault detection method provided in this embodiment of this application is further described based on a possible type of the first management unit and with reference to different application scenarios.

The first management unit in this application is an NSMF in the slice network. For different application scenarios, the NSMF has different fault detection mechanisms. This embodiment of this application is mainly described with reference to three application scenarios. In different application scenarios, specific content of an association relationship that can be invoked by the NSMF is different.

In the first application scenario, an association relationship that can be invoked by the NSMF when the NSMF detects the potential fault information includes the association relationship between an NSI and a service. For example, in the slice network shown in FIG. 1, the association relationship between an NSI and a service may include an association relationship between the service 1 or the service 2 and the NSI 1, and an association relationship between the service 3 and the NSI 2 or the NSI 3.

Because the NSI is used for carrying a service, if an NSI fails, the service carried by the NSI is likely to fail because of the faulty NSI even if no fault is currently detected in the service.

In the second application scenario (just an example not part of the invention), an association relationship that can be invoked by the NSMF when the NSMF detects the potential fault information includes the association relationship between an NSI and an NSSI. For example, in the slice network shown in FIG. 1, the association relationship between an NSI and an NSSI may include an association relationship between the NSI 1 or the NSI 2 and the NSSI 1, and an association relationship between the NSI 2 or the NSI 3 and the NSSI 2.

For the association relationship between an NSI and an NSSI, because the NSI may include NSSIs, if one of the NSSIs included in the NSI fails, the NSI is likely to fail because of the faulty NSSI even if no fault is currently detected in the NSI.

In the third application scenario (just an example not part of the invention), an association relationship that can be invoked by the NSMF when the NSMF detects the potential fault information includes the association relationship between an NSI and an NSSI and the association relationship between an NSI and a service. For example, in the slice network shown in FIG. 1, the association relationship between an NSI and an NSSI may include an association relationship between the NSI 1 or the NSI 2 and the NSSI 1, and an association relationship between the NSI 2 or the NSI 3 and the NSSI 2; and the association relationship between an NSI and a service may include an association relationship between the service 1 or the service 2 and the NSI 1, and an association relationship between the service 3 and the NSI 2 or the NSI 3.

If a faulty NSSI is determined, an NSI that has an association relationship with the NSSI is likely to fail because of the faulty NSSI even if no fault is currently detected in the NSI. If a faulty NSI is determined, a service carried by the NSI is likely to fail because of the faulty NSI even if no fault is currently detected in the service.

After the content that may be included in the association relationship that can be invoked by the NSMF in different application scenarios is described, fault detection mechanisms of the NSMF in different application scenarios are described below.

First, a fault detection mechanism of the NSMF in the first application scenario is described. In the first application scenario, an association relationship that can be invoked when the potential fault information is detected includes the association relationship between an NSI and a service.

The fault information determined by the NSMF in step 201 includes a faulty NSI. Because the NSMF can invoke the association relationship between an NSI and a service, in step 202, for the faulty NSI, the NSMF searches for the association relationship between an NSI and a service based on an identifier of the faulty NSI, and determines a service having a potential fault in one or more services corresponding to the identifier of the faulty NSI, where the determined service having a potential fault is used as the potential fault information.

When the faulty service is determined, all services corresponding to the identifier of the faulty NSI may be determined as services having a potential fault, or some services corresponding to the identifier of the faulty NSI may be determined as services having a potential fault. A specific determining manner is not limited in this embodiment of this application. For example, in the slice network shown in FIG. 1, if the NSMF determines that the NSI 1 is a faulty NSI, the NSMF searches for the association relationship between an NSI and a service based on an identifier of the NSI 1, and learns that services corresponding to the identifier of the NSI 1 are the service 1 and the service 2. The NSMF may determine both the service 1 and the service 2 as the services having a potential fault, or may determine one of the service 1 and the service 2 as the service having a potential fault.

In the foregoing first reporting manner, the first message reported by the NSSMF includes an identifier of the NSI having a potential fault that is detected by the NSSMF. Therefore, in step 202, the NSMF searches for an association relationship based on the identifier of the faulty NSI, and determine the service having a potential fault in one or more services corresponding to the identifier of the faulty NSI.

In a possible implementation, in the foregoing first reporting manner, the first message reported by the NSSMF may further include an identifier of the faulty service. In other words, the NSMF may further include the faulty service in the fault information determined in step 201. In step 202, the NSMF may further search for an association relationship based on the faulty service, and determine the NSI having a potential fault in one or more NSIs corresponding to the faulty service. Further, the NSMF may further determine, based on the determined NSI having a potential fault and the association relationship, the service having a potential fault that corresponds to the NSI having a potential fault.

The service having a potential fault that is determined by the NSMF in step 202 is used as the potential fault information.

Then a fault detection mechanism of the NSMF in the second application scenario (just an example not forming part of the invention) is described. In the second application scenario, an association relationship that can be invoked when the potential fault information is detected includes the association relationship between an NSI and an NSSI.

If the fault information determined by the NSMF in step 201 includes a faulty NSSI, because the NSMF can invoke the association relationship between an NSI and an NSSI, in step 202, for the faulty NSSI in the fault information, the NSMF may search for the association relationship between an NSI and an NSSI based on an identifier of the faulty NSSI, and determine an NSI having a potential fault in one or more NSIs corresponding to the identifier of the faulty NSSI.

In a possible implementation, if the fault information determined by the NSMF in step 201 includes a faulty NSI, in step 202, the NSMF may further search for the association relationship between an NSI and an NSSI based on the identifier of the faulty NSI, and determine an NSSI having a potential fault in one or more NSSIs corresponding to the identifier of the faulty NSI.

The NSI having a potential fault and/or the NSSI having a potential fault that are/is determined by the NSMF in step 202 may be used as the potential fault information.

Then a fault detection mechanism of the NSMF in the third application scenario (just an example not forming part of the invention) is described. In the third application scenario, an association relationship that can be invoked when the potential fault information is detected includes the association relationship between an NSI and an NSSI and the association relationship between an NSI and a service.

If the fault information determined by the NSMF in step 201 includes a faulty NSSI, because the NSMF can invoke the association relationship between an NSI and an NSSI and the association relationship between an NSI and a service, in step 202, for the faulty NSSI in the fault information, the NSMF may search for the association relationship between an NSI and an NSSI based on an identifier of the faulty NSSI, and determine an NSI having a potential fault in one or more NSIs corresponding to the identifier of the faulty NSSI. Then the NSMF may further search for the association relationship between an NSI and a service based on an identifier of the NSI having a potential fault, and determine a service having a potential fault in one or more services corresponding to the identifier of the NSI having a potential fault.

In a possible implementation, if the fault information determined by the NSMF in step 201 includes a faulty NSI, in step 202, the NSMF may further search for the association relationship between an NSI and a service based on an identifier of the faulty NSI, and determine a service having a potential fault in one or more services corresponding to the identifier of the faulty NSI. The NSMF may further search for the association relationship between an NSI and an NSSI based on the identifier of the faulty NSI, and determine an NSSI having a potential fault in one or more NSSIs corresponding to the identifier of the faulty NSI.

In a possible implementation, if the fault information determined by the NSMF in step 201 includes a faulty service, in step 202, the NSMF may further search for the association relationship between an NSI and a service based on an identifier of the faulty service, and determine an NSI having a potential fault in one or more NSIs corresponding to the identifier of the faulty service. The NSMF may further search for the association relationship between an NSI and an NSSI based on an identifier of the NSI having a potential fault, and determine an NSSI having a potential fault in one or more NSSIs corresponding to the identifier of the NSI having a potential fault.

According to the descriptions of the fault detection mechanisms of the NSMF in the foregoing three application scenarios, the NSMF determines the potential fault information by searching for the association relationship between an NSI and an NSSI and/or the association relationship between an NSI and a service, so that a possibility that the NSMF can detect a potential fault in advance can be increased.

The first management unit needs to perform processing based on the determined potential fault information, to avoid impact, on service continuity provided by the slice network, caused by an actual fault in the NSI having a potential fault, the NSSI having a potential fault, and/or the service having a potential fault.

Therefore, after the fault detection mechanisms in different scenarios in which the NSMF is used as the first management unit are described, the following describes how the first management unit processes the determined potential fault information.

After the first management unit determines the potential fault information, that is, after step 202, the first management unit may further process the potential fault information to avoid a potential fault. Two optional processing manners are described in this embodiment of this application.

In the first processing manner, the first management unit sends a warning message, where the warning message includes the potential fault information.

In this processing manner, the first management unit may notify another processing device of a potential fault in the slice network by using the warning message, so that the another processing device processes the potential fault in the slice network. A receiver of the warning message may be a CSMF.

In a possible implementation, the warning message may further include the fault information determined by the first management unit in step 201, so that a receiver, such as the CSMF, that receives the warning message may learn of the potential fault in the slice network by using the warning message, and also learn of a fault that has occurred in the slice network, to facilitate subsequent unified processing. In the second processing manner, the first management unit performs fault processing based on the potential fault information.

Since the potential fault information includes the service having a potential fault, the fault processing includes migrating the service having a potential fault to an NSI without a potential fault.

Through reconfiguration of the NSI and/or the NSSI, interruption of a service originally configured on the NSI and/or the NSSI caused by a fault that occurs in the NSI having a potential fault and/or the NSSI having a potential fault may be avoided.

A main cause of the potential fault in the service is the faulty NSI. Therefore, the service having a potential fault is migrated to the NSI without a potential fault, and the service is carried by the NSI without a potential fault, to avoid service interruption caused by a sudden fault in the NSI having a potential fault.

In the slice network, the NSMF determines the fault information and determines the potential fault information in the slice network based on the fault information and the association relationship that can be invoked. In addition, the NSSMF may also determine the fault information and the potential fault information. As shown in FIG. 3, the fault management method includes the following steps.

301. A first management unit determines fault information.

The fault information includes a faulty NSI.

The first management unit determines the fault information based on a message sent by a second management unit. A specific form of the message sent by the network unit and how the corresponding first management unit determines the fault information are described below in detail.

The first management unit in this application is an NSSMF in the slice network. Therefore, for step 301, the NSSMF may determine the fault information based on the message reported by a NF. This embodiment of this application provides at least three optional reporting manners.

In the first reporting manner (just an example not forming part of the invention), the NSSMF obtains an identifier of the faulty NF from the NF. In other words, the NF directly reports, to the NSSMF, the fault information found by the NF, for example, the identifier of the faulty NF, so that the NSMF directly determines, based on the identifier of the faulty NF, the faulty NF in the slice network.

In this manner, because the NF has determined the faulty NF in the slice network, system resources of the NSSMF can be saved, and efficiency of determining the potential fault information can be improved.

In the second reporting manner (just an example not forming part of the invention), the NSSMF may alternatively obtain reported service performance information from the NF, and the service performance information may be used to reflect NF performance. In other words, in this manner, when the NF does not need to determine the faulty NF and/or the faulty NSSI in the slice network, or when the NF cannot determine the faulty NF and/or the faulty NSSI in the slice network, the NSSMF may determine the fault information. The first management unit identifies the faulty NF and/or the faulty NSSI based on the obtained service performance information, or the NSSMF may further aggregate a plurality of pieces of received service performance information, for example, a plurality of pieces of service performance information obtained in a time period, then determine the faulty NF and/or the faulty NSSI based on comparison between or a variation trend of NF performance in each piece of service performance information.

In this manner, the NSMF may determine, by aggregating the obtained service performance information, the faulty NF and/or the faulty NSSI that may not be determined by the NF, thereby improving accuracy of subsequently determining the potential fault information.

Alternatively, the NSSMF may determine the fault information in both the foregoing two manners (just an example not forming part of the invention). In other words, the NSSMF may obtain both the identifier of the faulty NF from the NF and the service performance information from the NF. When determining the fault information, the NSSMF may determine the faulty NF and/or the faulty NSSI based on the service performance information, and determine and verify the faulty NF with reference to the identifier of the faulty NF. In this way, accuracy of determining the fault information is improved.

In the third reporting manner (just an example not forming part of the invention), the NSSMF used as the first management unit may further obtain an identifier of the faulty NSI sent by the second management unit. In a possible implementation, the second management unit may be an NSMF. In other words, because the NSMF is responsible for managing the NSI at the NSI layer in the slice network, when detecting the faulty NSI, the NSMF may notify the NSSMF of the identifier of the faulty NSI, so that the NSSMF can directly determine the corresponding faulty NSI based on the identifier of the faulty NSI, system resources of the NSSMF are saved, and efficiency of determining potential fault information is improved.

In the foregoing three manners, the fault information determined by the NSSMF may include the faulty NSSI and/or the faulty service. Then, the NSSMF may determine the potential fault information based on the fault information and an association relationship that can be invoked by the NSSMF.

302. The first management unit determines the potential fault information in the slice network based on the fault information and an association relationship.

The association relationship may be stored in a local storage location of the first management unit, or may be stored in another storage location that can be invoked by the first management unit. The association relationship may be used for identifying all or some network topology relationships in the slice network. A specific quantity of network topology relationships included in the slice network may be determined based on a specific application scenario, or may be determined based on layers managed by the first management unit. Specific content of the association relationship is not described in detail herein, and details are described in the following embodiments.

Because the association relationship can reflect the network topology relationship in the slice network, an NSI or an NSSI that has an association relationship with the faulty NSSI and/or the faulty NF in the slice network may be determined based on an identifier of the faulty NSSI and/or the identifier of the faulty NF in the fault information and the association relationship. Because the determined NSI, NSSI, and the like have an association relationship with the faulty NSSI and/or the faulty NF, the faulty NSSI and/or the faulty NF directly or indirectly affect normal use of the NSI and the NSSI.

Based on this, the first management unit determines the possible potential fault information in the slice network based on the NSI that is determined based on the fault information and the association relationship. It can be learned that, in the slice network, if the first management unit determines the fault information in the slice network, the first management unit may determine, based on the fault information and an association relationship between slices, the potential fault information that may exist in the slice network. Because the association relationship between an NSI and an NSSI and the association relationship between an NSSI and an NF that are included in the slice network can reflect a network topology relationship between parts in the slice network, the potential fault information determined based on the association relationship can reflect impact of a fault on the slice network by using the network topology relationship. The potential fault information is detected in advance, so that corresponding processing can be performed before an actual fault occurs in the NSI having a potential fault, the NSSI having a potential fault, and/or the NF having a potential fault, to avoid interruption of a group call service caused by the actual fault, thereby improving service continuity provided by the slice network, and improving experience of a tenant in use of the slice network.

Then, the fault detection method provided in this embodiment of this application is further described based on a type of the first management unit and with reference to different application scenarios.

In an example not forming part of the invention theThe first management unit in this application is an NSSMF in the slice network. For different application scenarios, the NSSMF has different fault detection mechanisms. This example is mainly described with reference to three application scenarios. In different application scenarios, specific content of an association relationship that can be invoked by the NSSMF is different.

In the first application scenario, an association relationship that can be invoked by the NSSMF when the NSSMF detects the potential fault information includes the association relationship between an NSI and an NSSI. For example, in the slice network shown in FIG. 1, the association relationship between an NSI and an NSSI may include an association relationship between the NSI 1 or the NSI 2 and the NSSI 1, and an association relationship between the NSI 2 or the NSI 3 and the NSSI 2.

Because the NSI is used for carrying a service, if an NSI fails, the service carried by the NSI is likely to fail because of the faulty NSI even if no fault is currently detected in the service.

In the second application scenario, an association relationship that can be invoked by the NSSMF when the NSSMF detects the potential fault information includes the association relationship between an NSSI and an NF. For example, in the slice network shown in FIG. 1, the association relationship between an NSSI and an NF may include an association relationship between the NSSI 1 and the NF 1 or the NF 2, and an association relationship between the NSSI 2 and the NF 2.

For the association relationship between an NSSI and an NF, because the NF may be implemented through the NSSI, if the NF fails, the NSSI implementing the NF is bound to fail.

In the third application scenario, an association relationship that can be invoked by the NSSMF when the NSSMF detects the potential fault information includes the association relationship between an NSI and an NSSI and the association relationship between an NSSI and an NF.

If a faulty NSSI is determined, an NSI that has an association relationship with the NSSI is likely to fail because of the faulty NSSI even if no fault is currently detected in the NSI. If a faulty NF is determined, an NSSI implementing the NF is bound to fail.

After the content that may be included in the association relationship that can be invoked by the NSSMF in different application scenarios is described, fault detection mechanisms of the NSSMF in different application scenarios are described below.

First, a fault detection mechanism of the NSSMF in the first application scenario is described. In the first application scenario, an association relationship that can be invoked when the potential fault information is detected includes the association relationship between an NSI and an NSSI.

In a possible implementation, the fault information determined by the NSSMF in step 301 includes a faulty NSSI. Because the NSSMF can invoke the association relationship between an NSI and an NSSI, in step 302, for the faulty NSSI, the NSSMF may search for the association relationship between an NSI and an NSSI based on an identifier of the faulty NSSI, and determine an NSI having a potential fault in one or more NSIs corresponding to the identifier of the faulty NSSI, where the determined NSI having a potential fault may be used as the potential fault information.

When the faulty NSI is determined, all NSIs corresponding to the identifier of the faulty NSSI may be determined as NSIs having a potential fault, or some NSIs corresponding to the identifier of the faulty NSSI may be determined as NSIs having a potential fault. A specific determining manner is not limited in this example of this application.

In a possible implementation, the NSSMF may further determine, based on the identifier of the NSI having a potential fault that is determined in step 302 and the association relationship between an NSI and an NSSI, an NSSI having a potential fault in one or more NSSIs corresponding to the NSI having a potential fault.

In a possible implementation, the fault information determined by the NSSMF in step 301 includes a faulty NSI. Because the NSSMF can invoke the association relationship between an NSI and an NSSI, in step 302, for the faulty NSI, the NSSMF may search for the association relationship between an NSI and an NSSI based on an identifier of the faulty NSI, and determine an NSSI having a potential fault in one or more NSSIs corresponding to the identifier of the faulty NSI, where the determined NSSI having a potential fault may be used as the potential fault information.

Then a fault detection mechanism of the NSSMF in the second application scenario is described. In the second application scenario, an association relationship that can be invoked when the potential fault information is detected includes the association relationship between an NSSI and an NF.

If the fault information determined by the NSSMF in step 301 includes a faulty NF, because the NSSMF can invoke the association relationship between an NSSI and an NF, in step 302, for the faulty NF, the NSSMF may search for the association relationship between an NSSI and an NF based on an identifier of the faulty NF, and determine an NSSI having a potential fault in one or more NSSIs corresponding to the identifier of the faulty NF. When the NSSMF determines the faulty NSSI, all NSSIs corresponding to the identifier of the faulty NF may be determined as NSSIs having a potential fault, or some NSSIs corresponding to the identifier of the faulty NF may be determined as NSSIs having a potential fault. A specific determining manner is not limited in this embodiment of this application.

In a possible implementation, if the association relationship that can be invoked by the NSSMF may further include the association relationship between an NSI and an NSSI, the NSSMF may further determine, based on an identifier of the NSSI having a potential fault and the association relationship between an NSI and an NSSI, an NSI having a potential fault in one or more NSIs corresponding to the NSSI having a potential fault.

Then a fault detection mechanism of the NSSMF in the third application scenario is described. In the third application scenario, an association relationship that can be invoked when the potential fault information is detected includes the association relationship between an NSI and an NSSI and the association relationship between an NSSI and an NF.

If the fault information determined by the NSSMF in step 301 includes a faulty NSSI, because the NSSMF can invoke the association relationship between an NSI and an NSSI, in step 302, for the faulty NSSI in the fault information, the NSSMF may search for the association relationship between an NSI and an NSSI based on an identifier of the faulty NSSI, and determine an NSI having a potential fault in one or more NSIs corresponding to the identifier of the faulty NSSI.

In a possible implementation, if the fault information determined by the NSSMF in step 301 includes a faulty NF, in step 302, the NSSMF may further search for the association relationship between an NSSI and an NF based on an identifier of the faulty NSI, and determine an NSSI having a potential fault in one or more services corresponding to the identifier of the faulty NF.

In a possible implementation, if the association relationship that can be invoked by the NSSMF may further include the association relationship between an NSI and an NSSI, the NSSMF may further determine, based on an identifier of the NSSI having a potential fault and the association relationship between an NSI and an NSSI, an NSI having a potential fault in one or more NSIs corresponding to the NSSI having a potential fault.

According to the descriptions of the fault detection mechanisms of the NSSMF in the foregoing three application scenarios (just examples not forming part of the invention), the NSSMF determines the potential fault information by searching for the association relationship between an NSI and an NSSI and/or the association relationship between an NSSI and an NF, so that a possibility that the NSSMF can detect a potential fault in advance can be increased.

The first management unit may further process the determined potential fault information, to avoid impact, on service continuity provided by the slice network, caused by an actual fault in the NSI having a potential fault and/or the NSSI having a potential fault.

Therefore, after the fault detection mechanisms in different scenarios in which the NSSMF is used as the first management unit are described, the following describes how the first management unit processes the determined potential fault information.

After the first management unit determines the potential fault information, that is, after step 302, the first management unit may further perform warning for the potential fault information to avoid a potential fault.

In a possible implementation, the first management unit sends a warning message, where the warning message includes the potential fault information. In this processing manner, the first management unit may notify another processing device of a potential fault in the slice network by using the warning message, so that the another processing device processes the potential fault in the slice network. A receiver of the warning message may be a CSMF or an NSMF.

In a possible implementation, the warning message may further include the fault information determined by the first management unit in step 301, so that a receiver, such as the CSMF, that receives the warning message may learn of the potential fault in the slice network by using the warning message, and also learn of a fault that has occurred in the slice network, to facilitate subsequent unified processing.

The following describes, with reference to the accompanying drawings and some specific scenarios, the fault management method provided in the embodiments of this application.

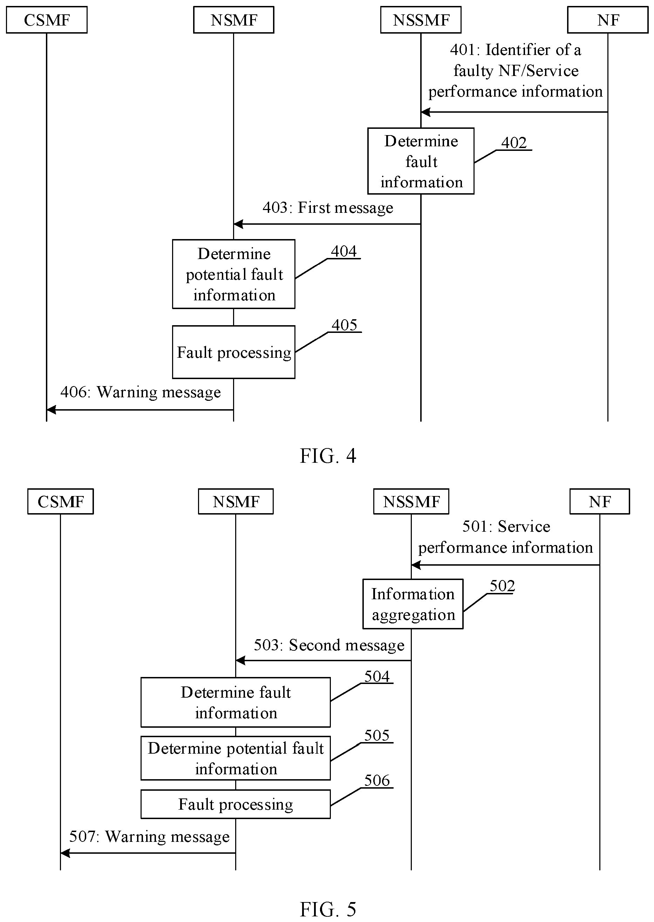

FIG. 4 is a signaling flowchart of a fault management method according to an embodiment of this application. As shown in FIG. 4:
401. The NF reports an identifier of a faulty NF or service performance information to the NSSMF.
   For this step, refer to the related implementation described when the first management unit is the NSSMF. It should be noted that when reporting the identifier of the faulty NF to the NSSMF, the NF may further report an identifier of a faulty service, a fault type, and the like.
402. The NSSMF determines fault information based on the identifier of the faulty NF or the service performance information, where the fault information may include a faulty NSSI and/or the faulty NF; and searches for an association relationship between an NSI and an NSSI, to determine a faulty NSI; or the NSSMF may determine an NSI having a potential fault.
403. The NSSMF sends a first message to an NSMF.

In this step, if the NSSMF determines the faulty NSI, the first message may be the foregoing fault information. The first message carries an identifier of the faulty NSI.

If the NSSMF further determines the NSI having a potential fault, the first message may further carry an identifier of the NSI having a potential fault.

404. The NSMF searches for an association relationship between an NSI and a service based on the obtained first message, and determines a service having a potential fault in one or more services corresponding to the identifier of the faulty NSI.

405. The NSMF may perform fault processing, and migrate the service having a potential fault to another NSI without a potential fault.

406. The NSMF may further send a warning message to a CSMF, to notify the CSMF of the service having a potential fault, and further notify the CSMF of the identifier of the faulty NSI, the identifier of the faulty NSSI, the identifier of the faulty service, the fault type, and the like.

FIG. 5 is a signaling flowchart of a fault management method according to an example not forming part of the invention. A difference between the scenario shown in FIG. 5 and the scenario shown in FIG. 4 mainly lies in the NSSMF. In FIG. 5, the NSSMF no longer determines a faulty NSSI and/or a faulty NF, and instead the NSMF determines the faulty NSSI and/or the faulty NF. As shown in FIG. 5:
501. The NF reports service performance information to the NSSMF. The service performance information may include an NF identifier, a service identifier, service performance on the NF, and the like.
502. The NSSMF aggregates the service performance information reported by the NF, to obtain a second message. The second message may include an NSSI identifier and performance information corresponding to the NSSI, and may further include the service identifier, the NF identifier, and the like.
503. The NSSMF sends the second message to an NSMF.
504. The NSMF determines a faulty NSI based on the second message.
505: The NSMF determines potential fault information.
   The NSMF searches for an association relationship between an NSI and a service based on an identifier of the faulty NSI, and determines a service having a potential fault in one or more services corresponding to the identifier of the faulty NSI.
506. The NSMF may perform fault processing, and migrate the service having a potential fault to another NSI or NSSI without a potential fault.
507. The NSMF may further send a warning message to a CSMF, to notify the CSMF of the service having a potential fault, and further notify the CSMF of the identifier of the faulty NSI, an identifier of a faulty NSSI, an identifier of a faulty service, a fault type, and the like.

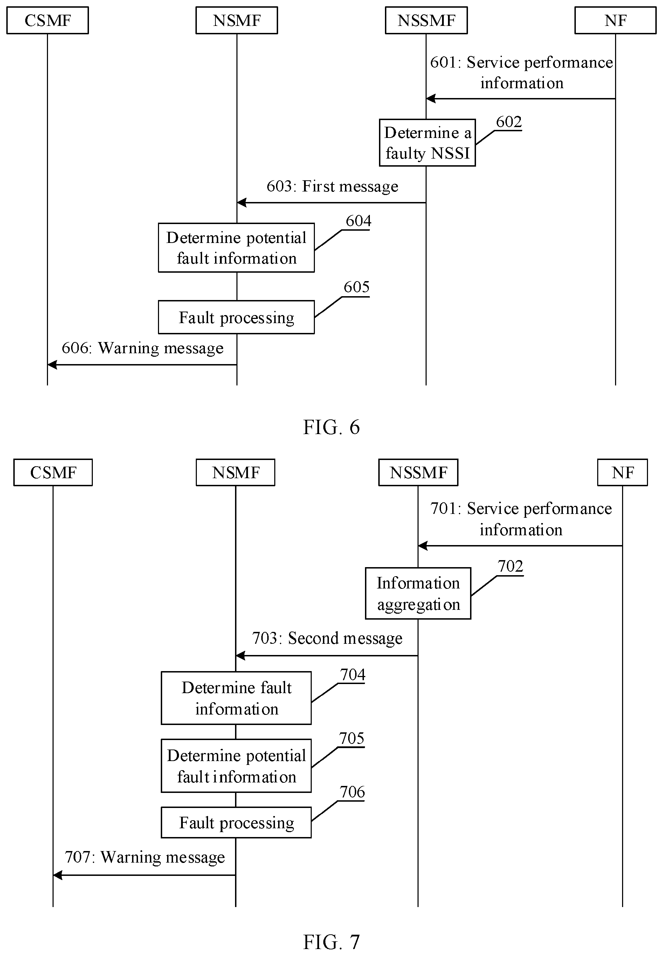

FIG. 6 is a signaling flowchart of a fault management method according to an example not forming part of the invention. A difference between the scenario shown in FIG. 6 and the scenarios shown in FIG. 4 and FIG. 5 mainly lies in the NSMF and the NSSMF. In FIG. 6, an association relationship that can be found by the NSMF may include an association relationship between an NSI and a service and an association relationship between an NSI and an NSSI. The NSSMF does not search for the association relationship. Therefore, in the scenario shown in FIG. 6, the NSMF is mainly used to determine the potential fault information. As shown in FIG. 6:
601. The NF reports service performance information to the NSSMF.
   For this step, refer to the content described when the first management unit is the NSSMF. The service performance information may further include an NF identifier and a service identifier.
602. The NSSMF may determine a faulty NSSI based on the aggregated service performance information reported by the NF.
603. The NSSMF sends a first message to an NSMF.
   In this step, if the NSSMF determines a faulty NSI, the first message may carry an identifier of the faulty NSI, and further carry an identifier of a faulty service, a fault type, and the like.
604. The NSMF searches for, based on the obtained first message, an association relationship between an NSI and an NSSI and an association relationship between an NSI and a service, and determines an NSI having a potential fault in one or more NSIs corresponding to an identifier of the faulty NSSI, and a service having a potential fault in one or more services corresponding to an identifier of an NSI having a potential fault.
605. The NSMF may perform fault processing, and migrate the service having a potential fault to another NSI or NSSI without a potential fault.
606. The NSMF may further send a warning message to a CSMF, to notify the CSMF of the service having a potential fault, and further notify the CSMF of the identifier of the faulty NSI, the identifier of the faulty NSSI, the identifier of the faulty service, a fault type, and the like.

FIG. 7 is a signaling flowchart of a fault management method according to an example not forming part of the invention. A difference between the scenario shown in FIG. 7 and the scenario shown in FIG. 6 mainly lies in the NSSMF. In FIG. 7, the NSSMF no longer determines a faulty NSSI and/or a faulty NF, and instead the NSMF determines the faulty NSSI and/or the faulty NF. As shown in FIG. 7:
701. The NF reports service performance information to the NSSMF. The service performance information may include an NF identifier, a service identifier, service performance on the NF, and the like.
702. The NSSMF aggregates the service performance information reported by the NF, to obtain a second message. The second message includes an NSSI identifier and performance information corresponding to the NSSI, and may further include the service identifier.
703. The NSSMF sends the second message to an NSMF.
704. The NSMF determines a faulty NSI and/or a faulty NSSI based on the second message.
705. The NSMF determines potential fault information based on the faulty NSI and /or the faulty NSSI.

For the faulty NSI, the NSMF searches for an association relationship between an NSI and a service based on an identifier of the faulty NSI, and determines a service having a potential fault in one or more services corresponding to the identifier of the faulty NSI.

For the faulty NSSI, the NSMF searches for, based on an identifier of the faulty NSSI, an association relationship between an NSI and an NSSI and an association relationship between an NSI and a service; and determines an NSI having a potential fault in one or more NSIs corresponding to the identifier of the faulty NSSI, and a service having a potential fault in one or more services corresponding to an identifier of the NSI having a potential fault.

706. The NSMF may perform fault processing, and migrate the service having a potential fault to another NSI or NSSI without a potential fault.

707. The NSMF may further send a warning message to a CSMF, to notify the CSMF of the service having a potential fault, and further notify the CSMF of the identifier of the faulty NSI, the identifier of the faulty NSSI, an identifier of a faulty service, a fault type, and the like.

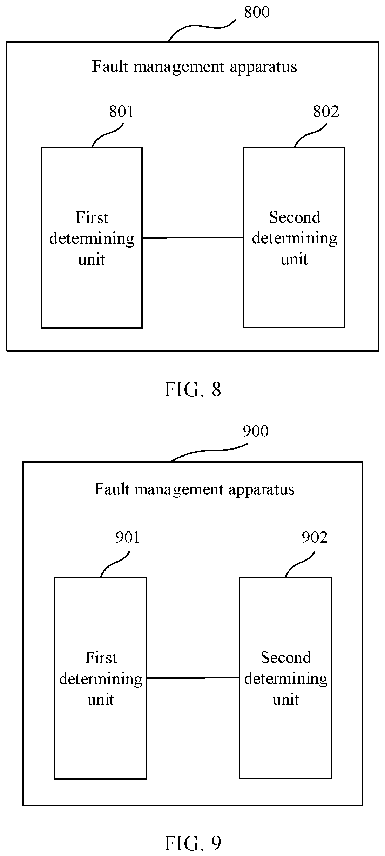

FIG. 8 is an apparatus structural diagram of a fault management apparatus according to an embodiment of this application. The fault management apparatus is applied to a slice network, and the fault management apparatus 800 includes a first determining unit 801 and a second determining unit 802.

The first determining unit 801 is configured to determine fault information, where the fault information includes a faulty slice, and the faulty slice includes a faulty network slice instance NSI .

The second determining unit 802 is configured to determine potential fault information in the slice network based on the fault information and an association relationship, where the potential fault information includes a service having a potential fault; and the association relationship includes an association relationship between an NSI and a service in the slice network.

In a possible implementation, the first determining unit is further configured to receive a first message sent by a second management unit, where the first message includes an identifier of the faulty NSI; and
the first determining unit is further configured to determine the fault information based on the first message.

Further, the second determining unit is further configured to determine, based on the identifier of the faulty NSI and the association relationship between an NSI and a service, the service having a potential fault in one or more services corresponding to the faulty NSI.

In a possible implementation, the apparatus further includes a sending unit, where
the sending unit is configured to send a warning message, where the warning message includes the potential fault information.

The apparatus further includes a processing unit, where
the processing unit is configured to perform fault processing based on the potential fault information, wherein
the fault processing includes migrating the service having a potential fault to an NSI without a potential fault.

It can be learned that, in the slice network, the fault management apparatus determines the fault information in the slice network, the fault management apparatus determines, based on the fault information and an association relationship between slices, the potential fault information that may exist in the slice network, namely the service that may have a potential fault. Because the association relationship between an NSI and an NSSI and the association relationship between an NSI and a service that are included in the slice network can reflect a network topology relationship between parts in the slice network, the potential fault information determined based on the association relationship can reflect impact of a fault on the slice network by using the network topology relationship. The potential fault information is detected in advance, so that corresponding processing can be performed before an actual fault occurs in the service having a potential fault, to avoid interruption of a group call service caused by the actual fault, thereby improving service continuity provided by the slice network, and improving experience of a tenant in use of the slice network.

The fault management apparatus includes a processor and a memory. The first determining unit, the second determining unit, and the like are all stored in the memory as program units, and the processor executes the program units stored in the memory to implement corresponding functions.

The processor includes a kernel, and the kernel invokes a corresponding program unit from the memory. One or more kernels may be set, and fault management in the slice network is performed by adjusting a kernel parameter.

The memory may include a non-persistent memory, a random access memory (RAM), and/or a nonvolatile memory in a computer-readable medium, for example, a read-only memory (ROM) or a flash memory (flash RAM). The memory includes at least one storage chip.

FIG. 9 is an apparatus structural diagram of a fault management apparatus according to an example not forming part of the invention. The fault management apparatus is applied to a slice network, and the fault management apparatus 900 includes a first determining unit 901 and a second determining unit 902.

The first determining unit 901 is configured to determine fault information, where the fault information includes a faulty network slice instance NSI, a faulty network slice subnet instance NSSI, and/or a faulty network function NF in the slice network.

The second determining unit 902 is configured to determine potential fault information in the slice network based on the fault information and an association relationship, where the potential fault information includes an NSI having a potential fault, an NSSI having a potential fault, and/or an NF having a potential fault; and the association relationship includes an association relationship between an NSI and an NSSI and/or an association relationship between an NSSI and an NF in the slice network.

In a possible implementation, the first determining unit is further configured to obtain an identifier of the faulty NF sent by a network unit, and
the first determining unit is further configured to determine the corresponding faulty NF based on the identifier of the faulty NF.

In a possible implementation, the first determining unit is further configured to obtain service performance information sent by a network unit, where the service performance information is used to reflect NF performance; and
the first determining unit is further configured to identify the faulty NSSI and/or the faulty NF based on the service performance information.

In a possible implementation, the first determining unit is further configured to obtain an identifier of the faulty NSI sent by a second management unit, and
the first determining unit is further configured to determine the corresponding faulty NSI based on the identifier of the faulty NSI.

In a possible implementation, if the fault information includes the faulty NSI and the association relationship includes the association relationship between an NSI and an NSSI, the second determining unit is further configured to determine, based on the identifier of the faulty NSI and the association relationship between an NSI and an NSSI, the NSSI having a potential fault in one or more NSSIs corresponding to the faulty NSI.

In a possible implementation, if the fault information includes the faulty NSSI and the association relationship includes the association relationship between an NSI and an NSSI, the second determining unit is further configured to determine, based on the identifier of the faulty NSSI and the association relationship between an NSI and an NSSI, the NSI having a potential fault in one or more NSIs corresponding to the faulty NSSI.

In a possible implementation, if the fault information includes the faulty NSSI and the association relationship includes the association relationship between an NSSI and an NF, the second determining unit is further configured to determine, based on the identifier of the faulty NSSI and the association relationship between an NSSI and an NF, the NF having a potential fault in one or more NFs corresponding to the faulty NSSI.

It can be learned that, in the slice network, if the fault management apparatus determines the fault information in the slice network, the fault management apparatus may determine, based on the fault information and an association relationship between slices, the potential fault information that may exist in the slice network, for example, the NSI, the NSSI, and/or the NF that may have a potential fault. Because the association relationship between an NSI and an NSSI and the association relationship between an NSSI and an NF that are included in the slice network can reflect a network topology relationship between parts in the slice network, the potential fault information determined based on the association relationship can reflect impact of a fault on the slice network by using the network topology relationship. The potential fault information is detected in advance, so that corresponding processing can be performed before an actual fault occurs in the NSI having a potential fault, the NSSI having a potential fault, and/or the NF having a potential fault, to avoid interruption of a group call service caused by the actual fault, thereby improving service continuity provided by the slice network, and improving experience of a tenant in use of the slice network.

The fault management apparatus includes a processor and a memory. The first determining unit, the second determining unit, and the like are all stored in the memory as program units, and the processor executes the program units stored in the memory to implement corresponding functions.

The processor includes a kernel, and the kernel invokes a corresponding program unit from the memory. One or more kernels may be set, and fault management in the slice network is performed by adjusting a kernel parameter.

The memory may include a non-persistent memory, a random access memory (RAM), and/or a nonvolatile memory in a computer-readable medium, for example, a read-only memory (ROM) or a flash memory (flash RAM). The memory includes at least one storage chip.

An example not forming part of the invention provides a device. The device includes a processor, a memory, and a program that is stored in the memory and that can run on the processor. When executing the program, the processor implements the following steps: determining fault information, where the fault information includes a faulty network slice instance NSI, a faulty network slice subnet instance NSSI, and/or a faulty network function NF in a slice network; and determining potential fault information in the slice network based on the fault information and an association relationship, where the potential fault information includes an NSI having a potential fault, an NSSI having a potential fault, and/or an NF having a potential fault; and the association relationship includes an association relationship between an NSI and an NSSI and/or an association relationship between an NSSI and an NF in the slice network. The device in this example may be a server, a PC, a PAD, a mobile phone, or the like.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A fault management method performed by a first management unit being a network slice management function, NSMF, applied to a slice network, wherein the method comprises:
• receiving a first message from a second management unit being a network slice subnet management function, NSSMF, wherein the first message comprises an identifier of a faulty network slice instance, NSI;
▪ determining (steps 201, 301), based on the first message, the faulty NSI;
• determining (steps 202, 302) first potential fault information in the slice network based on the faulty NSI and a first association relationship reflecting a network topology of the slice network,
▪ wherein the first association relationship is an association relationship between NSIs and services in the slice network, wherein the faulty NSI is one of the NSIs in the first association relationship,
▪ wherein the first potential fault information comprises a service having a potential fault among one or more services that are associated to the faulty NSI in the first association relationship,
▪ wherein the potential fault is a possible future fault, which did not yet come into existence as an actual fault;
• performing fault processing based on the first fault potential fault information, the fault processing comprising migrating the service having the potential fault to an NSI without a potential fault.

2. A network slice management function, NSMF, configured to carry out the method of claim 1.

3. A computer program product comprising an instruction, wherein, when the computer program product runs on a computer of a network slice management function, NSMF, the computer is enabled to perform the fault management method according to claim 1.

## Patentansprüche

1. Fehlerverwaltungsverfahren, das durch eine erste Verwaltungseinheit durchgeführt wird, die eine Netzwerk-Slice-Verwaltungsfunktion, NSMF, ist, die auf ein Slice-Netzwerk angewendet wird, wobei das Verfahren Folgendes umfasst:
• Empfangen einer ersten Nachricht aus einer zweiten Verwaltungseinheit, die eine Netzwerk-Slice-Subnetzverwaltungsfunktion, NSSMF, ist, wobei die erste Nachricht eine Kennung einer fehlerhaften Netzwerk-Slice-Instanz, NSI, umfasst;
▪ Bestimmen (Schritte 201, 301) der fehlerhaften NSI basierend auf der ersten Nachricht;
• Bestimmen (Schritte 202, 302) erster potenzieller Fehlerinformationen in dem Slice-Netzwerk basierend auf der fehlerhaften NSI und einer ersten Assoziationsbeziehung, die eine Netzwerktopologie des Slice-Netzwerks widerspiegelt,
▪ wobei die erste Assoziationsbeziehung eine Assoziationsbeziehung zwischen NSIs und Diensten in dem Slice-Netzwerk ist, wobei die fehlerhafte NSI eine der NSIs in der ersten Assoziationsbeziehung ist,
▪ wobei die ersten potenziellen Fehlerinformationen einen Dienst umfassen, der einen potenziellen Fehler unter einem oder mehreren Diensten aufweist, die mit der fehlerhaften NSI in der ersten Assoziationsbeziehung assoziiert sind,
▪ wobei der potenzielle Fehler ein möglicher zukünftiger Fehler ist, welcher noch nicht als ein tatsächlicher Fehler entstanden ist;
• Durchführen einer Fehlerverarbeitung basierend auf den ersten Informationen über mögliche Fehler, wobei die Fehlerverarbeitung das Migrieren des Dienstes, der den potenziellen Fehler aufweist, in eine NSI ohne einen potenziellen Fehler umfasst.

2. Netzwerk-Slice-Verwaltungsfunktion, NSMF, die dazu konfiguriert ist, das Verfahrens nach Anspruch 1 durchzuführen.

3. Computerprogrammprodukt, umfassend eine Anweisung, wobei, wenn das Computerprogrammprodukt auf einem Computer einer Netzwerk-Slice-Verwaltungsfunktion, NSMF, läuft, der Computer in die Lage versetzt wird, das Fehlerverwaltungsverfahren nach Anspruch 1 durchzuführen.

## Revendications

1. Procédé de gestion de défauts réalisé par une première unité de gestion étant une fonction de gestion de tranches réseau, NSMF, appliquée à un réseau en tranches, dans lequel le procédé comprend :
• la réception d'un premier message provenant d'une seconde unité de gestion étant une fonction de gestion de sous-réseau de tranches réseau, NSSMF, dans lequel le premier message comprend un identifiant d'une instance de tranche réseau, NSI, défectueuse ;
▪ la détermination (étapes 201, 301), sur la base du premier message, de la NSI défectueuse ;
• la détermination (étapes 202, 302) de premières informations de défaut potentiel dans le réseau en tranches sur la base de la NSI défectueuse et d'une première relation d'association reflétant une topologie de réseau du réseau en tranches,
▪ dans lequel la première relation d'association est une relation d'association entre des NSI et des services dans le réseau en tranches, dans lequel la NSI défectueuse est l'une des NSI dans la première relation d'association,
▪ dans lequel les premières informations de défaut potentiel comprennent un service ayant un défaut potentiel parmi un ou plusieurs services qui sont associés à la NSI défectueuse dans la première relation d'association,
▪ dans lequel le défaut potentiel est un défaut futur possible, qui n'est pas encore apparu comme un défaut réel ;
• la réalisation d'un traitement de défaut sur la base des premières informations de défaut potentiel, le traitement de défaut comprenant la migration du service ayant le défaut potentiel vers une NSI sans défaut potentiel.

2. Fonction de gestion de tranches réseau, NSMF, configurée pour mettre en œuvre le procédé selon la revendication 1.

3. Produit de programme informatique comprenant une instruction, dans lequel, lorsque le produit de programme informatique est exécuté sur un ordinateur d'une fonction de gestion de tranches réseau, NSMF, l'ordinateur est activé pour mettre en œuvre le procédé de gestion de défauts selon la revendication 1.
